# EUROPEAN PATENT APPLICATION

(11) **EP 3 002 152 A1**
(43) Date of publication of application: **06.04.2016**
(21) Application number: 15182615.3
(22) Date of filing: 27.08.2015
(51) Int. Cl.: B60N 2/48

(54) **NOISE-CANCELATION APPARATUS FOR A VEHICLE HEADREST**

(30) Priority: 02.10.2014 US 201414504833
(71) Applicant: Aisin Technical Center Of America, Inc., Northville, MI 48168 (US)
(72) Inventor: BASKIN, Bradley, Northville, MI, 48168 (US); SZCZYGIEL, Lindsey, Northville, MI, 48168 (US); TAKEUCHI, Katsuhiko, Northville, MI, 48168 (US); ARCHAMBEAU, Eric, Northville, MI, 48168 (US)
(74) Representative: Intès, Didier Gérard André

(57) **Abstract**

A noise-cancelation headrest for a vehicle including a slidable side wing (120, 122) on a side of headrest; a plurality of microphones (106, 108, 110, 112, 114, 116, 118) configured to detect an audio-noise signal and output a first plurality of electrical signals; a plurality of speakers (142, 146, 148) configured to receive a second plurality of electrical signals and output an acoustic signal; and noise-cancelation circuitry configured to receive the first plurality of electrical signals and output the second plurality of electrical signals.

## Description

### BACKGROUND

### FIELD

This disclosure relates to noise cancelation in a headrest, and more particularly relates to a noise cancelation apparatus in the interior space of a headrest in a vehicle.

### DESCRIPTION OF THE RELATED ART

In some situations, it may be desirable to decrease the level of noise in a space either by preventing noise from entering the space (i.e., passive noise cancelation) or by actively canceling out noise present in a space (i.e., active noise cancelation).

Passive noise cancelation can be effective and inexpensive (e.g., by installing sound barriers or by using sound absorbing material), but often passive noise cancelation poses significant obstacles to the aesthetics, functionality, and safety of a given space making passive solutions unfeasible or undesirable. Additionally, sound absorbing materials and sound barriers can be bulky and can be ineffective at certain audio frequencies.

Active noise cancellation, in contrast to passive noise cancellation, does not necessarily require bulky or unaesthetic encumbrances occupying in the space. Active noise cancellation actively creates a canceling wave with equal and opposite amplitude to the offending noise, such that the superposition of the canceling and noise waves sum to zero or approximately to zero over the space (i.e., the canceling wave is actively constructed to cancel the noise). In practice, microphones typically detect the noise signal. The microphone signal is then processed (e.g., the microphone signal can be amplified, inverted, spectrally filtered, and delayed) before being fed to speakers to produce the canceling acoustic wave. In a multichannel system having multiple speakers and microphones, phased array principles can be used to target noise cancelation over a particular space a predetermined distance from the speakers by tuning the values of the processing circuitry feeding the respective speakers.

With regard to a vehicle headrest, examples of the numerous undesirable features in conventional active-noise cancellation installations include: having bulky and/or aesthetically displeasing shapes (e.g., due to using multiple and/or power intensive electronics requiring large power supplies), lacking comfort (e.g., due to speaker vibrations being coupled to the head via the headrest framework or due to headrests requiring uncomfortable materials arranged where they are likely to be contracted by a head), and headrests requiring line-of-site access to the user's ears limiting practical applicability. Therefore, a compact and robust active-noise cancellation headrest is desired using low power electronics in a comfortable and aesthetically pleasing arrangement.

### SUMMARY

A noise-cancelation headrest for a vehicle including a slidable side wing on a side of headrest; a plurality of microphones configured to detect an audio-noise signal and output a first plurality of electrical signals; a plurality of speakers configured to receive a second plurality of electrical signals and output an acoustic signal; and noise-cancelation circuitry configured to receive the first plurality of electrical signals and output the second plurality of electrical signals.

### BRIEF DESCRIPTION OF THE DRAWINGS

A more complete understanding of this disclosure is provided by reference to the following detailed description when considered in connection with the accompanying drawings, wherein:
Figure 1A shows a cross-sectional view of a an implementation of a headrest having an active-noise-cancelation apparatus within the interior space of the headrest with side wing speakers flush with the surface of the side wings;
Figure 1B shows a cross-sectional view of a an implementation of a headrest having an active-noise-cancelation apparatus within the interior space of the headrest with side wing speakers recessed inside the side wings;
Figure 2 shows a cross-sectional view of an implementation of a structure of covering material of a headrest and of holes through the covering material;
Figure 3A shows a front view of an implementation of a headrest having an active-noise-cancelation apparatus, with side wings of the headrest in a forward position and side wing speakers flush with the surface of the side wings;
Figure 3B shows a front view of an implementation of a headrest having an active-noise-cancelation apparatus, with side wings of the headrest in a forward position and side wing speakers recessed inside the side wings;
Figure 4 shows a cross-sectional view of another implementation of an active-noise-cancelation headrest having two speakers side-by-side;
Figure 5 shows a top view of an implementation of a headrest having an active-noise-cancelation apparatus, with side wings of the headrest in a forward position, and the positions of noise canceling regions for different implementations of the an active-noise-cancelation headrest;
Figure 6 shows a signal flow diagram of an implementation of an active-noise-cancelation apparatus; and
Figure 7 shows a schematic of an analog circuit implementation of an active-noise-cancelation apparatus.

### DETAILED DESCRIPTION

Referring now to the drawings, wherein like reference numerals designate identical or corresponding parts throughout the several views. Further, as used herein, the words "a," "an" and the like generally carry a meaning of "one or more," unless stated otherwise.

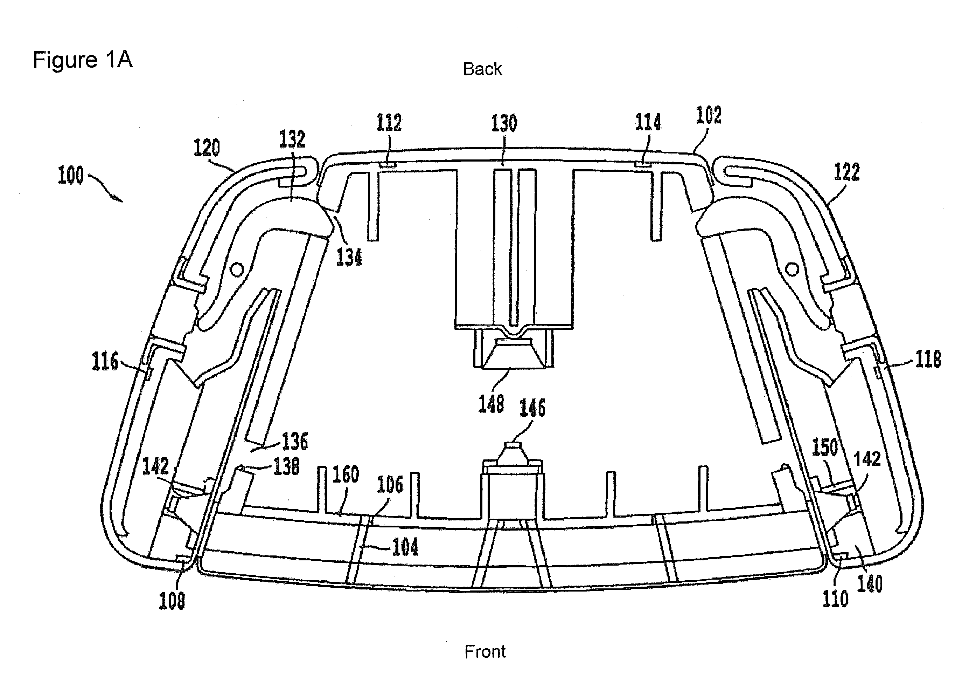

Figure 1A shows a cross-section of a top view of a headrest having a noise-cancelation apparatus. Figure 1A shows an internal structure of a vehicle headrest 100 in which the noise-cancelation apparatus is integrated in the interior space of the vehicle headrest 100. An acoustic signal travels through a plurality of front orifices 104 to reach a plurality of front microphones 106 which are fitted into the internal structure 160. In one alternative implementation of the integrated headrest and noise cancelation apparatus 100, the front microphones 106 are arranged on the outer surface of headrest 100. In contrast to this alternative implementation, placing the front microphones 106 inside the headrest, as shown in Figure 1A, provides improved comfort and aesthetics. The "outer surface" is defined as any surface that can come in contact with the user. In the implementation shown in Figure 1A, each front orifice 104 has an accompanying and adjacent front microphone 106. In an alternative implementation, only some, but not all, front orifices 104 are accompanied by an adjacent front microphone 106. In another implementation the front microphones 106 are not arranged at the orifices 104. In one implementation the number of front microphones 106 is less than four, provided there is at least one front microphone 106. In another implementation the number of front microphones 106 is greater than four.

In addition to the front microphone 106, an acoustic signal can also be detected by microphones 108, 110, 116, and 118 in the side wings 120 and 122 as well as microphones 112 and 114 in structure 130, the structure 130 being at the back side of the a main body 102 of headrest 100. The strategic positioning of microphones near the user, to the sides of the user, and behind the user is preferred so that an acoustic signal of the noise best encompasses the entire environment around the user and the vehicle headrest 100, and to provide directional information regarding the acoustic signal in order to better cancel the acoustic noise in the space immediately surrounding the user.

The side wings 120 and 122 translate forward and backward creating a private and comfortable space for the user when they are in the forward position. Locking mechanism 132 leaves passage 134 and enters passage 136 when the side wing is translated into the forward position. In one implementation, the locking mechanism 132 contacts switch 138 allowing power to be supplied to the noise-cancelation apparatus, when locking mechanism 132 is in passage 136. In this implementation, the noise-cancelation apparatus is only active when the side wings 120 and 122 are in the forward position, creating a private environment for the user.

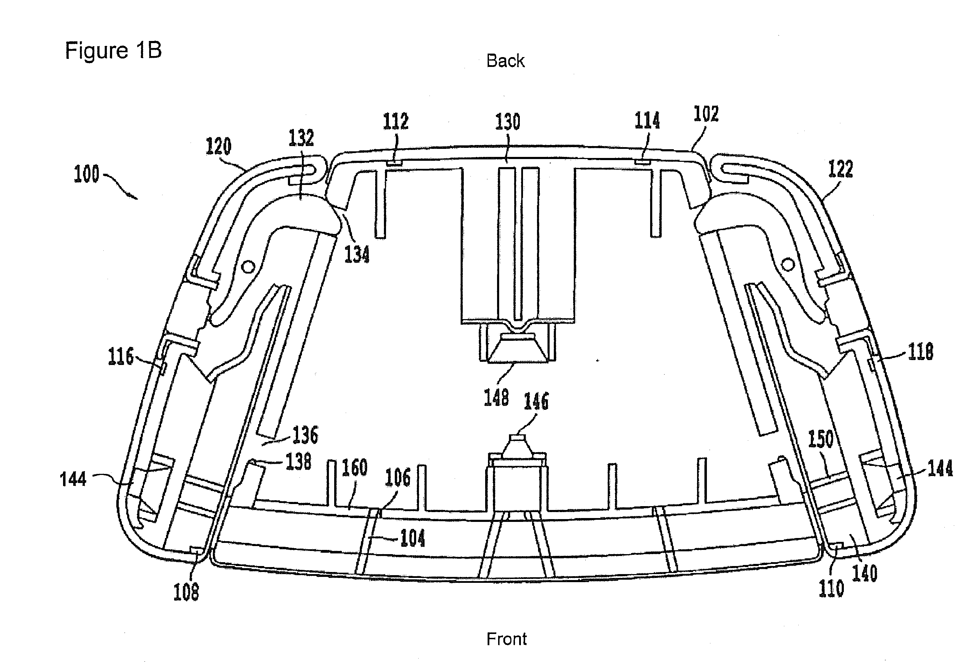

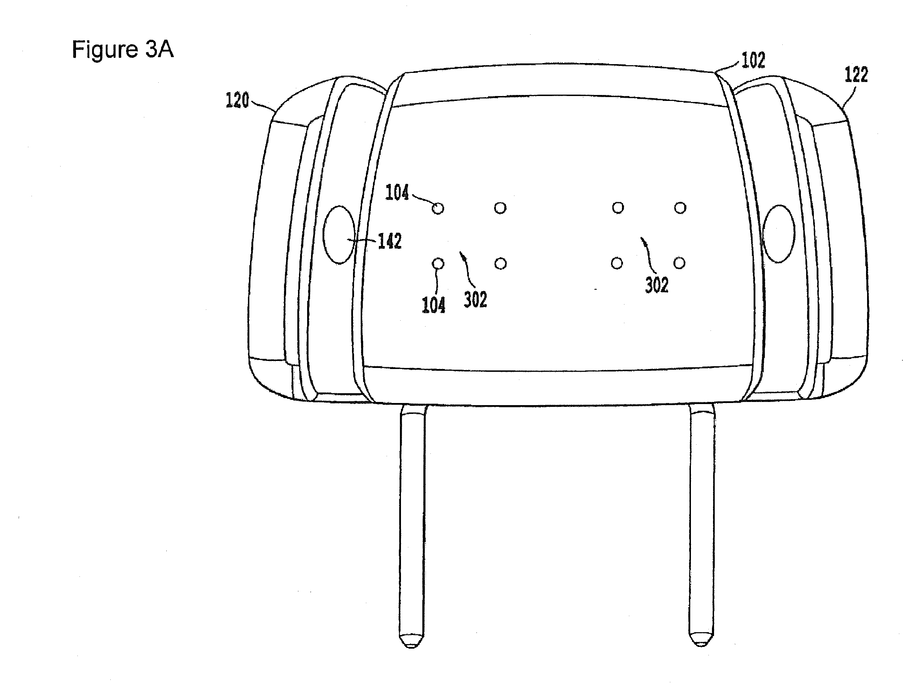

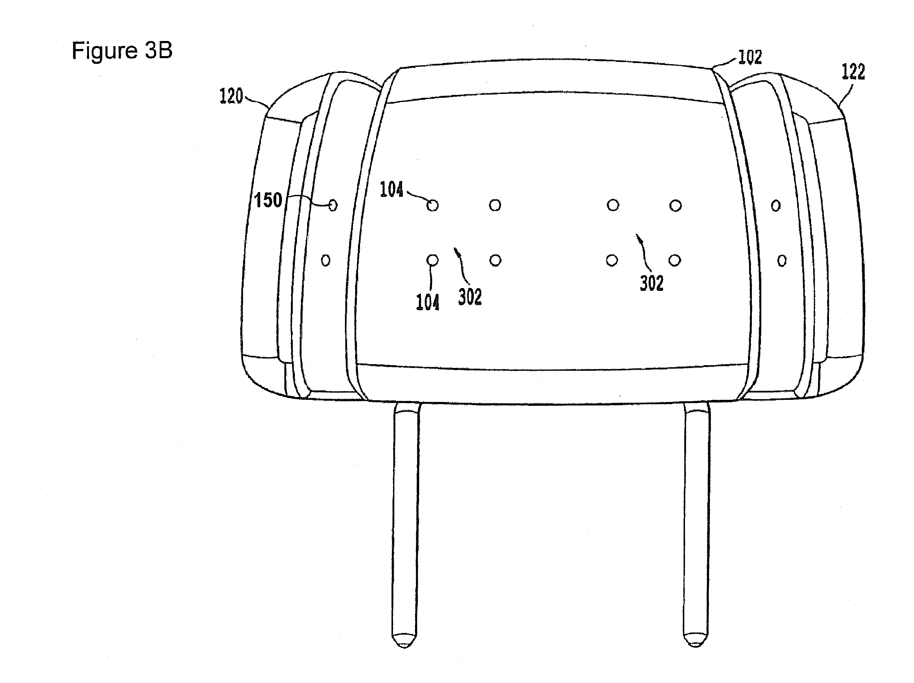

Discussed below the side wing 120 and 122, as shown in Figures 1A, 1B, 3A, and 3B, differ in specific structure. Two types of side wings are shown in Figure 1A and Figure 1B. One of ordinary skill in the art will recognize that the positions of the speakers and microphones, within the side wings, can be modified. Side wings 120 and 122 include speakers 142 provided adjacent to the exterior surface of the side wings 120 and 122. Side wings 120 and 122 allow for a private environment created by the side wings 120 and 122 and body 102 of the vehicle headrest 100 and the noise-cancelation apparatus.

The side wings 120 and 122 in Figure 1A may be chosen for an application not requiring a comfortable resting place for the user, but only requiring a private space. In one implementation, speakers 142 are mounted to a side-wing structure including a vibration damping material between the speakers 142 and the side-wing structure in order to attenuate vibrations transmitted through the side wings and through the main body 102 of the headrest 100 by the speakers 142. In one implementation, the vibration damping material is Sorbothane®. In another implementation, the vibration damping material is a thin, flexible membrane. One of ordinary skill in the art will recognize that the features and relationships among of the headrest, speakers, microphones, and side wings are not limited to the shape and style shown in Figure 1A.

Embodiments of the noise-cancelation apparatus integrated within a headrest are not to limit the shape, style, or function of the main body 102 or side wings 120 and 122 shown in Figure 1A, although the advantage of having sliding side wings to create a private environment should be recognized. Sliding wings are advantageous because they not interfere with any surrounding pillars or parts of the vehicle.

The speakers 142 transmit a noise reduction signal directly into the space around the head of the user, as illustrated in Figure 1A. The noise reduction signal destructively interferes with an acoustic signal to reduce the noise near the vehicle headrest 100 and especially near the head of the user. Including speakers 142, 146 and 148 provides a large region of noise cancelation around the head of the user, creating a quiet and usable working or resting environment. One of ordinary skill in the art will recognize that the speakers can be arranged in different locations within the interior space of the headrest and the side wings. Also, one of ordinary skill will recognize that a different number of speakers can be used to provide a noise-cancelation acoustic signal. In some implementations, a greater number of speakers spread over a greater number of locations can more effectively cancel noise at a location distant from the speakers.

For example, Figure 1B shows an implementation of the noise cancelling headrest, wherein the speakers 144 are positioned within the side wings 120 and 122. This is in contrast to the implementation shown in Figure 1A, wherein the speakers 142 are each flush with the surface of the side wings 120 and 122. In Figure 1B, the sound is transmitted from the speakers 144 through the side orifices 150 into the user space. Further, cushion 140 provides a comfortable surface for the user to rest their head. The side wings 120 and 122 allows for a private environment as well as a comfortable resting space to be created by the side wings 120 and 122 of the vehicle headrest 100 and the noise-cancelation apparatus.

In one implementation, speakers 144 are mounted to a side-wing structure including a vibration damping material between the speakers 144 and the side-wing structure in order to attenuate vibrations transmitted through the side wings and through the main body 102 of the headrest 100 by the speakers 144. In one implementation, the vibration damping material is Sorbothane®. In another implementation, the vibration damping material is a thin, flexible membrane. One of ordinary skill in the art will recognize that the features and relationships among of the headrest, speakers, microphones, and side wings are not limited to the shape and style shown in Figure 1A.

In one implementation, speakers 146 and 148 are mounted to the main body 102 of the headrest 100 using a vibration damping material between the speakers 146 and 148 and a structure of the main body 102 of the headrest 100 in order to attenuate vibrations transmitted through the main body 102 of the headrest 100 by the speakers 146 and 148.

The speakers 144 transmit a noise reduction signal through side orifices 150 into the space around the head of the user, as illustrated in Figure 1B. The noise reduction signal destructively interferes with an acoustic signal to reduce the noise near the vehicle headrest 100 and especially near the head of the user. Including speakers 142, 146 and 148 provides a large region of noise cancelation around the head of the user, creating a quiet and usable working or resting environment. One of ordinary skill in the art will recognize that the speakers can be arranged in different locations within the interior space of the headrest and the side wings. Also, one of ordinary skill will recognize that a different number of speakers can be used to provide a noise-cancelation acoustic signal. In some implementations, a greater number of speakers spread over a greater number of locations can more effectively cancel noise at a location distant from the speakers.

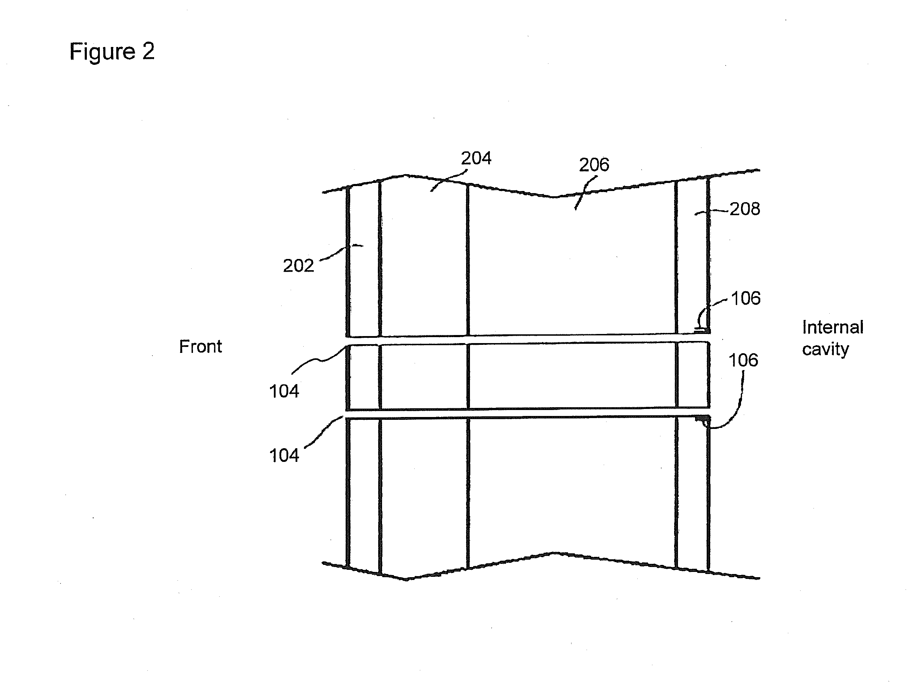

Figure 2 shows a cross-section of a side-view of the portion of the vehicle headrest 100 which houses the front orifices 104 front microphones 106. Two rows of front orifices 104 are provided, though one of ordinary skill will recognize that different implementations of the front orifices 104 are possible, wherein the number of rows of front orifices 104 and their orientations are not limited to the arrangement of orifices 104 illustrated in Figure 2. For example, the front orifices 104 and the side orifices 150 can be arranged in a square array pattern, a diamond array pattern, a pentagonal pattern, a hexagonal pattern, or another pattern. The size of the orifices can be several millimeters in diameter (e.g. 10 millimeters or 20 millimeters), or the orifices can be small in diameter (e.g., a millimeter or a fraction of a millimeter).

In Figure 2, each front orifice 104 is accompanied by an adjacent front microphone 106 such that sound traveling through the front orifice 104 can reach the front microphone 106. The front orifices 104 travel through cover material 202, through cushions 204 and 206, and through internal structure 208. In the implementation shown in Figure 2, the front microphones 106 are fitted into internal structure 208.

Figure 3A shows a front view of the vehicle headrest 100 of Figure 1A with a noise-cancelation apparatus having two groups 302 and 304 of four front orifices 104 so that an acoustic signal may enter the left or right side of the main body 102, and may enter a plurality of front orifices 104 even when the head of the user may obstruct some of the front orifices 104. One of ordinary skill in the art will recognize that other arrangements of the orientation of orifices 104 can be used.

Side wings 120 and 122 in Figure 3A are shown in a position forward, in contrast to the retracted position of the side wings shown in Figure 1A. Figure 3A, illustrates an arrangement of the speaker 142 in side wings 120 and 122. This arrangement provides that speakers 142 are mounted such that the sound emitting end of speaker 142 is flush with the surface of side wing 120. One of ordinary skill in the art will recognize that the end of speaker 142 can also be raised or recessed relative to the surface of side wing 120.

Similarly, Figure 3B illustrates an arrangement of the speakers 144 within side wings 120 and 122, corresponding to Figure 1B. The sound is transmitted between the interior space and exterior space of side wing 122 through side orifices 150, thus allowing microphones in the side wings 120 and 122 to obtain the noise signal and allowing the noise reduction signal from the speaker in side wings 120 and 122 to be transmitted to the exterior space. The side orifices 150 are arranged in one column of two orifices in the embodiment shown in side wings 120 and 122. One of ordinary skill in the art will recognize that the side orifices 150 can be arranged in other configurations.

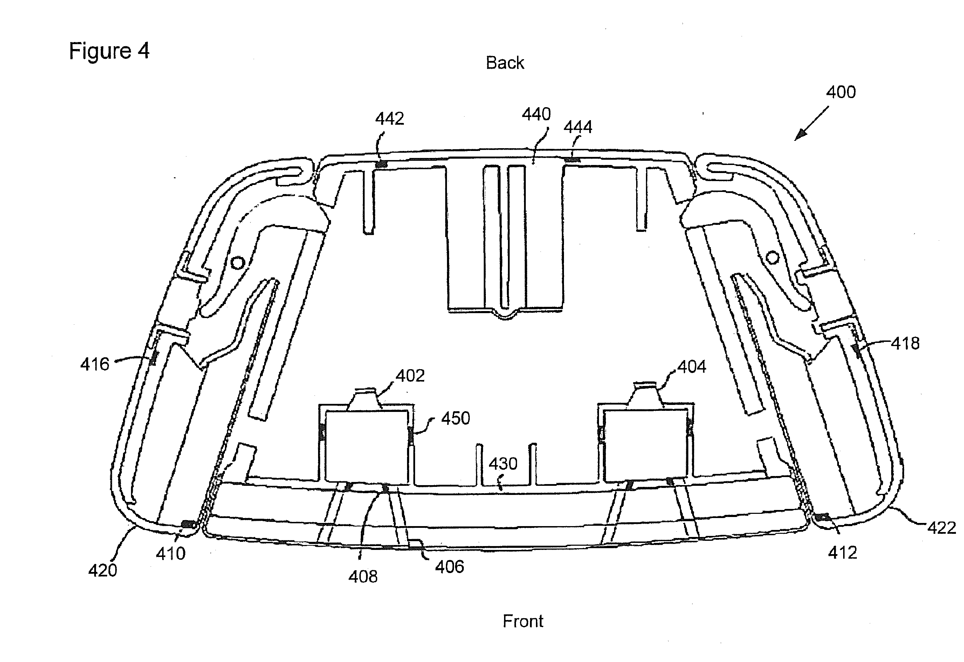

Figure 4 show an alternative non-limiting embodiment of the noise-cancelation apparatus for a vehicle headrest. The differences between this embodiment and the those shown in Figures 1, 2, and 3 are the chosen locations of front orifices, microphones, and speakers 402 and 404. In one implementation of this embodiment, a quiet and private resting environment for the user is created, without requiring the side wings 420 and 422 to be in the fully forward position. In one implementation, the noise-cancelation apparatus would be always active even when the side wings are in the retracted position. An acoustic signal travels through front orifices 406 to microphones 408 fitted into internal structure 430. An acoustic signal can also reach microphones 410, 412, 416, and 418 in side wings 420 and 422 as well as microphones 442 and 444 in the structure 440 in the back of vehicle headrest 400. The signal is processed in an analog circuit or digital signal processor and sent to speakers 402 and 404. A noise reduction signal is then sent out through front orifices 406 to create a noise cancelation region encompassing the ears of the user. Speakers 402 and 404 are mounted with vibration damping material 450 to reduce the amount of vibration transmitted through the vehicle headrest 400. The use of vibration damping material 450 helps to maintain user comfort.

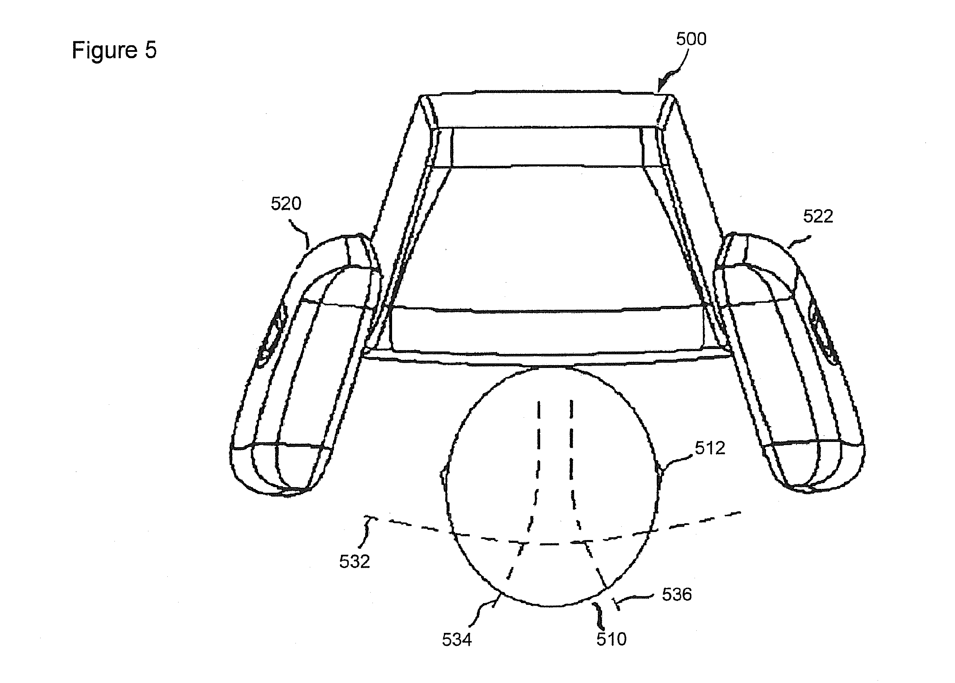

Figure 5 illustrates the noise cancelation regions 532, 534, and 536 which encompass the ears 512 of the user 510. The size of the head of the user 510 is assumed to be that of the 95th percentile sized US male. In one implementation corresponding to the configurations shown in Figure 1A and Figure 1B in which a speaker is located in each side wing and two central speakers are located interior to the structure of the head rest, the noise cancelation regions corresponding to the side speakers are bounded by lines 534 and 536 respectively. Similarly, the boundary of the noise cancelation region generated by the central speakers is given by line 532. When side wings 520 and 522 are in the forward and usable position, the user 510 is presented with a private area of reduced noise. The cancelation region can be tailored to a given volume, by adjusting the amplitude, phase, and delay of the noise cancelation signal from the respective speakers. For example, in one implementation, a delay in the noise cancelation signal larger than the time it takes sound to travel from the front and side surfaces of the vehicle headrest 500 to the ears 512 of the user 510 allows the noise cancelation regions 532, 534, and 536 to be extended past the ears 512 of the user 510, ensuring that an acoustic signal of noise or sound around the user 510 is perceived as quieter.

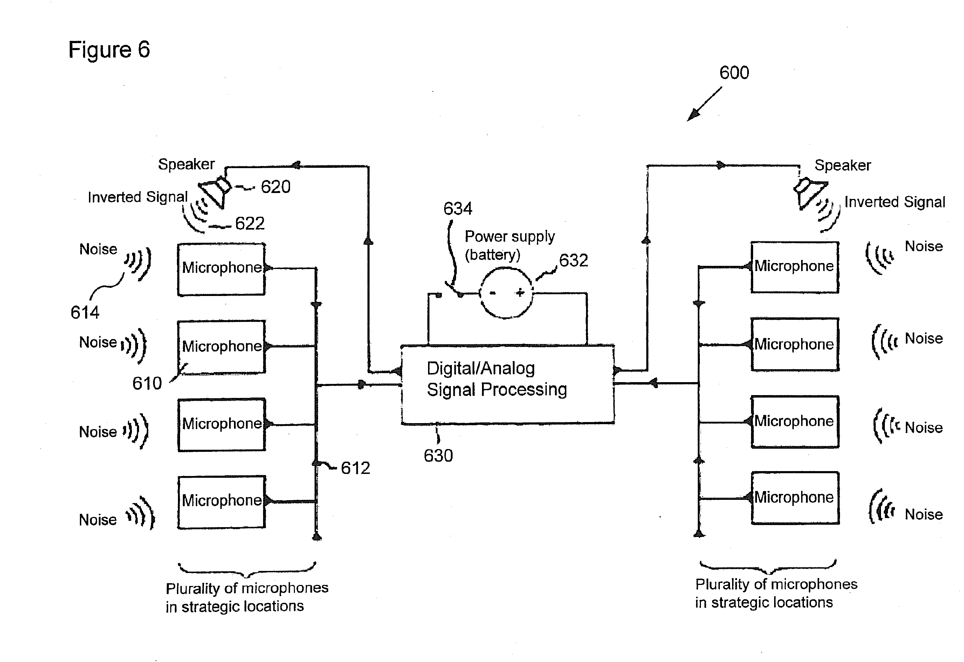

Figure 6 is a chart describing the signal flow of the noise-cancelation apparatus 600, wherein noise signals transduced by the microphones 610 travel along the lines in the directions of arrows 612. Both sides of the system are identical in this example, though each side may have a different number of microphones 610 or speakers 620. Here, the left and right signals presented to the speakers 620 are both strong, even in the situation that sound cannot reach one or more microphones 610. Noise 614 near the user or headrest is sensed by microphones 610 and travels to the digital/analog signal processing circuit 630 that is connected to a power source 632. The power source 632 can take the form of a battery or, in an alternative implementation, the power supply can be power supplied by the vehicle. One of ordinary skill in the art will recognize that various power supplies can be used.

Switch 634 is normally open, not allowing power to any signal processing circuit 630. Switch 634 is moved into the closed position, supplying power from the power supply 632 to any signal processing circuit 630, when the side wings of the vehicle headrest are moved into the forward position, creating a private environment for the user. In an alternative implementation, switch 634 can be omitted, if the noise-cancelation apparatus is desired to be always active.

In one implementation, the signal processor 630 is chosen to be an analog signal processing circuit. The analog signal processing circuit 630 inverts the noise signal to create the noise reduction signal that is out-of-phase with the noise 614. The analog signal processing circuit 630 also amplifies the signal so that the speakers 610 may produce a signal high enough in amplitude to equal that of the noise 614 in the environment. The analog signal processing circuit 630 also applies the appropriate delay to the signal such that the noise 614 is reduced near the ears of any user.

In one implementation, the signal processor 630 is chosen to be a digital signal processing unit rather than an analog signal processing circuit. The digital signal processing unit 630 includes an analog-to-digital converter to receive signals from the microphones 610 and a digital-to-analog converter to send signals to the speakers 610 along with the digital signal processor 630 programmed to invert, amplify, and delay the signal appropriately.

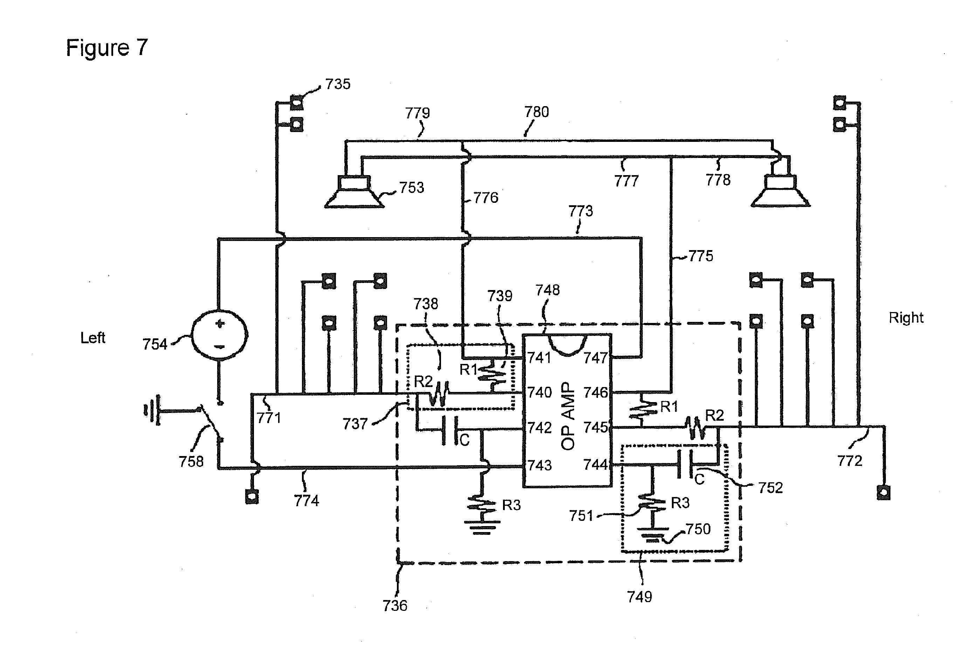

Figure 7 illustrates a circuit schematic of an implementation of the basic circuitry of the noise-cancelation apparatus, wherein the signal processor 630 is chosen to be an analog signal processing circuit. Some elements are not shown as they are dependent on the specific components chosen and the electrical ratings thereof, and could be easily understood or found by one of ordinary skill in the art. The circuit elements shown are the microphones 735; an analog signal processing circuit 736, including: resistors 738, 739, and 751, and capacitor 752; an integrated ground 750; a dual input general purpose operational amplifier (op amp) 748; speakers 753; a power supply 754; and a switch 758.

The power supply 754 takes the form of any device that may supply power to the circuit, such as, but not limited to, an integrated battery or a vehicle battery. The signals in the microphones 735 join at lines 771 and 772 which lead the signals to the analog signal processing circuit 736. The resistances of resistor R1 739 and R2 738 are chosen based on testing to ensure that the signal is amplified by the feedback loop 737 to an appropriate level for the speakers 753.

Feedback loop 737 is formed by inverting a first (left) input 740 of op amp 748, the first (left) output 741 of op amp 48 and the resistors R1 739 and R2 738. A similar feedback loop is formed by a second (right) inverting input 745 and second (right) output 746 of op amp 748 along with resistors R1 and R2 on the second (right) side of the circuit. These feedback loops along with op amp 748 provide the amplification and inversion functions to the noise signal. The portion of the circuit within box 749 provides delay to the noise signal. Resistor R3 751 is connected to ground 750 and the second (right) non-inverting input 744 of op amp 748. Capacitor C 752 is also connected to the second (right) non-inverting input 744 of op amp 748. The specific parameters of capacitor C 752 and resistor R3 751 are chosen to provide to the signal the necessary delay which expands the noise cancelation region past the ears of the 95^{th} percentile male head.

Similarly, the first (left) non-inverting input 742 of op amp 748, an identical capacitor C, an identical resistor R3, and an electrical ground provide the delay to the left side of the circuit. The signal on the left side moves from the first (left) output 741 of op amp 748 along line 776, splitting along lines 779 and 780 to send the signal to the left input of each speaker 753. The other signal on the second (right) side moves from the second (right) output 746 of op amp 748 along line 775, splitting along lines 777 and 778 to send the signal to the left input of each speaker.

Through this design, both microphones 735 on the left side and the right side send signals to each speaker so that the noise can be canceled appropriately even if one of the speakers has a blocked output or is damaged. The number of speakers and microphones should not be limited by this embodiment considering the fact that such a circuit can take inputs from any number of microphones and output to any number of speakers. Power supply 754 provides power to op amp 748 so that it may function appropriately in the circuit by connecting to negative port 743 and positive port 747.

In one implementation, shown in Figure 7, power is supplied to op amp 748 of the noise-cancellation apparatus only when switch 758 is closed. Switch 758 is normally open. Switch 758 is moved to the closed position when the side wings of the vehicle headrest are in the forward position. Switch 758 is not necessary if the noise-cancelation apparatus is desired to be always active. Power supply 754 also provides power to the microphones 735 and to the speakers 753 if an active speaker is chosen.

To lower power consumption, a passive speaker is recommended, though it should be noted that using passive speaker requires further amplification of the signal, which can be achieved by the appropriate choice of values for resistors R1 738 and R2 739. One of ordinary skill in the art will recognize that a plurality of configurations for the signal processing circuit 630 of the noise-cancelation apparatus could be employed-the choice of which configuration of the signal processing circuit 630 depending on the application requirements, available input signals from the microphones, amplitudes, and the delays to be sent to certain speakers in the system.

An advantage of an all analog processing circuit 630, such as the one shown in Figure 7, is that high power consuming electronics such as digital signal processors, mixers, analog-to-digital converters, digital-to-analog converters, dynamic noise controllers, etc. can be avoided. By using less high power consuming electronics in the signal processing circuit 630, a smaller and less massive power supply can be used requiring less bulky packaging.

While certain implementations have been described, these implementations have been presented by way of example only, and are not intended to limit the teachings of this disclosure. Indeed, the novel methods, apparatuses and systems described herein may be embodied in a variety of other forms; furthermore, various omissions, substitutions and changes in the form of the methods, apparatuses and systems described herein may be made without departing from the spirit of this disclosure.

## Claims

1. A noise-cancelation headrest for a vehicle, comprising:
a slidable side wing (120, 122) on a side of headrest;
a plurality of microphones (106, 108, 110, 112, 114, 116, 118) configured to detect an audio-noise signal and output a first plurality of electrical signals;
a plurality of speakers (142, 146, 148) configured to receive a second plurality of electrical signals and output an acoustic signal; and
noise-cancelation circuitry (736) configured to receive the first plurality of electrical signals and output the second plurality of electrical signals.

2. The noise-cancelation headrest according to claim 1, further comprising:
a first plurality of holes (104) provided through exterior layers (202, 204, 206, 208) of the headrest, wherein the acoustic signal is transmitted from the plurality of speakers (146, 148) to an exterior of the headrest through the first plurality of holes (104) in the headrest.

3. The noise-cancelation headrest according to claim 2, wherein
the first plurality of holes (104) in the headrest are orifices in covering (202) and cushion (204) materials of the headrest.

4. The noise-cancelation headrest according to anyone of claims 1 to 3, wherein
the noise-cancelation circuitry (736) is configured to amplify and invert the first plurality of electrical signals to obtain the second plurality of electrical signals, and
the noise-cancelation circuitry (736) is an analog circuit including an inverting amplifier (748).

5. The noise-cancelation headrest according to anyone of claims 1 to 3, wherein
the noise-cancelation circuitry includes a digital signal processor, an analog-to-digital converter, and a digital-to-analog converter.

6. The noise-cancelation headrest according to anyone of claims 1 to 5, wherein
each of the plurality of speakers (402, 404) is fixed to the internal structure of the headrest using a vibration damping material (450).

7. The noise-cancelation headrest according to anyone of claims 1 to 6, wherein
the side wing (120, 122) is slidable relative to a main body (102) of the headrest, and the side wing (120, 122) is fixed in either a retracted position or in a forward position.

8. The noise-cancelation headrest according to claim 7, wherein
the plurality of speakers includes speakers (142) fixed to an internal structure of the side wing (120, 122), and the plurality of microphones includes microphones (108, 110, 116, 118) fixed to the internal structure of the side wing (120, 122).

9. The noise-cancelation headrest according to claim 7 or 8, further comprising:
a power supply (754) having a switch (138) configured to connect and disconnect the power supply to the noise-cancelation circuitry (736), wherein
the power supply (754) is disconnected from the noise-cancelation circuitry (736) when the side wing (120, 122) is in the retracted position, and
the power supply (754) is connected to the noise-cancelation circuitry (736) when the side wing (120, 122) is in the forward position.

10. The noise-cancelation headrest according to anyone of claims 7 to 9, further comprising:
a second plurality of holes (150) provided through exterior layers of the side wing (120, 122), wherein the acoustic signal from the plurality of speakers (144) within the side wing (120, 122) is transmitted to an exterior of the side wing (120, 122) through the second plurality of holes (150).

11. The noise-cancelation headrest according to claim 10, wherein
the second plurality of holes (150) in the side wing (120, 122) are orifices in covering and cushion materials of the side wing.

12. The noise-cancelation headrest according to anyone of claims 7 to 11, further comprising:
a locking mechanism (132) to fix the side wing (120, 122) in either the forward or the retracted position, the locking mechanism (132) preventing the side wings (120, 122) from sliding, when the locking mechanism (132) is engaged, and the locking mechanism (132) allowing the side wings (120, 122) to slide relative to the main body (102) of the headrest, when the locking mechanism (132) is disengaged.

13. The noise-cancelation headrest according to claim 8, wherein
the speakers (144) fixed to the internal structure of the side wing (120, 122) directly interface with an exterior of the side wings (120, 122) when the side wing is in the forward position.

14. The noise-cancelation headrest according to claim 2 or 3, wherein
the plurality of microphones includes front microphones (106) each arranged adjacent to a corresponding hole (104) of the first plurality of holes.

15. The noise-cancelation headrest according to claim 4, wherein
the noise-cancelation circuitry (736) includes a plurality of operational amplifiers, each operational amplifier configured to drive a corresponding input on each of the plurality of speakers.
